# FASCICULE DE BREVET EUROPEEN

(11) **EP 2 315 622 B1**
(45) Date de publication et mention de la délivrance du brevet: **11.10.2017**
(21) Numéro de dépôt: 09800112.6
(22) Date de dépôt: 16.07.2009
(51) Int. Cl.: B01D 61/06, B01D 61/12, C02F 1/00, C02F 1/44, G05B 13/04, B01D 61/16

(54) **INSTALLATION DE DESSALEMENT D'EAU PAR OSMOSE INVERSE.**
UMKEHROSMOSE-WASSERENTSALZUNGSANLAGE
REVERSE-OSMOSIS WATER DESALINATION PLANT

(30) Priorité: 21.07.2008 FR 0804140
(43) Date de publication de la demande: 04.05.2011
(73) Titulaire: Suez International, 92040 Paris la Défense Cedex (FR)
(72) Inventeur: BONNELYE, Véronique, F-78700 Conflans (FR); FIEVEZ, Eric, F-92150 Suresnes (FR)
(74) Mandataire: Cabinet Armengaud Aîné
(86) Numéro de dépôt international: PCT/FR2009/000873
(87) Numéro de publication internationale: WO 2010/010243

(56) Documents cités:
- WO-A-02/09855
- WO-A-98/16289
- WO-A-2006/079483
- WO-A-2006/106158
- WO-A-2007/041823
- US-A- 4 983 305
- US-A1- 2004 109 788
- US-A1- 2004 173 528
- GEISLER P ET AL: "Reduction of the energy demand for seawater RO with the pressure exchange systems PES" DESALINATION, ELSEVIER, AMSTERDAM, NL, vol. 135, no. 1-3, 20 avril 2001 (2001-04-20), pages 205-210, XP004249642 ISSN: 0011-9164
- ALATIQI I ET AL: "Process control in water desalination industry: an overview" DESALINATION, ELSEVIER, AMSTERDAM, NL, vol. 126, no. 1-3, 1 novembre 1999 (1999-11-01), pages 15-32, XP004190178 ISSN: 0011-9164
- KRAUSE H ET AL: "Improvement of operation and availability of MSF plants" DESALINATION, ELSEVIER, AMSTERDAM, NL, vol. 107, no. 1, 1 septembre 1996 (1996-09-01), pages 59-74, XP004019206 ISSN: 0011-9164

## Description

L'invention est relative à une installation de dessalement d'eau par osmose inverse, du genre de celles qui comportent :
- une unité à membrane d'osmose inverse,
- au moins une pompe haute pression pour porter une première partie de l'eau à traiter à une pression supérieure à sa pression osmotique et l'envoyer à l'entrée de l'unité à membrane,
- un moyen de réglage du débit de la pompe haute pression, ce moyen comprenant une vanne réglable installée sur la sortie de la pompe haute pression et/ou un moteur d'entraînement de la pompe à vitesse variable,
- un récupérateur d'énergie de type échange de pression propre à transférer la pression du concentrât sortant de l'unité à membrane à une deuxième partie de l'eau à traiter, ce récupérateur comportant
   - une première entrée recevant la deuxième partie de l'eau à traiter,
   - une deuxième entrée recevant le concentrât,
   - une première sortie délivrant à une entrée de l'unité à membrane un mélange entre une première partie du concentrât et la deuxième partie de l'eau à traiter,
   - une deuxième sortie délivrant une deuxième partie du concentrât, et un moyen de réglage du taux de mélange entre la première partie du concentrât et la deuxième partie de l'eau à traiter et une vanne de contrôle réglable (VC) installée à la deuxième sortie du récupérateur permettant de régler le taux de conversion,
      - des capteurs de divers paramètres de fonctionnement, en particulier pression, débit, température, taux de salinité, prévus en des endroits appropriés,
      - et des boucles de régulation pour que le moyen de réglage du débit de la pompe haute pression, le moyen de réglage du taux de mélange entre la première partie du concentrât et la deuxième partie de l'eau à traiter, et la vanne de contrôle réglable (VC) se maintiennent à une valeur de consigne.

Dans une installation de dessalement d'eau par osmose inverse, la consommation énergétique des pompes haute pression représente environ les deux tiers de la consommation énergétique et environ 20 % du coût d'exploitation.

Le dessalement par osmose inverse utilise la mise sous pression du liquide salé au-delà de sa pression osmotique afin de permettre la perméation de l'eau seule (sans les sels dissous) au travers d'une membrane semi-perméable. Le compartiment salé se concentre en sel. Le compartiment perméat est alimenté en eau débarrassée de la majorité de ses sels. La membrane semi-perméable est caractérisée par son rejet de sels (ou passage de sel exprimé en %) et par sa perméabilité à l'eau définie à une température donnée, généralement à 25°C. Le système, alimenté en continu avec de l'eau salée, typiquement de l'eau de mer, permet de collecter en continu de l'eau douce débarrassée de ses sels du côté perméat de la membrane, et une solution concentrée du côté concentrât de la membrane.

Le taux de conversion est défini comme étant le rapport du débit de perméat au débit total d'alimentation de la membrane, et permet de caractériser le fonctionnement hydraulique de l'installation.

La membrane d'osmose inverse est mise en oeuvre dans des modules de type spiralé ou capillaires ou tubulaires, les modules étant agencés dans des tubes de pression, en parallèle et en montage en série-rejet. L'eau d'alimentation est mise sous pression par une pompe haute pression, ou moyen équivalent.

Les principaux paramètres de fonctionnement sont mesurés au moyen de capteurs de débit, pression, conductivité, température. Ils concernent l'eau prétraitée alimentant l'installation, le perméat et le concentrât sortant de l'installation.

Les systèmes récupérateurs d'énergie sont mis en oeuvre afin de récupérer l'énergie encore présente dans le concentrât à la sortie des membranes d'osmose inverse. Les récupérateurs d'énergie peuvent être de type hydraulique ou à déplacement positif. On parle typiquement de turbine Pelton ou Francis, couplée directement ou indirectement à la pompe d'alimentation, ou de systèmes à déplacement positif de type ERI PX, ou Calder DWEER ou KSB, ou autres systèmes similaires. Dans ces derniers cas, le concentrât pressurisé transfère sa pression à une partie de l'eau d'alimentation par mise en contact directe ou indirecte.

La connaissance du bilan énergétique du procédé permet de choisir les équipements et de dimensionner les installations en prenant en compte le paramètre énergie. Ce dimensionnement est basé sur les hypothèses de salinité, température et conditions hydrauliques attendues lorsque l'installation sera construite et en fonctionnement. Une fois les installations construites, les paramètres d'entrée varient de façon non maîtrisée, nécessitant la mise en place de boucles de régulation afin de maintenir le système stable. De telles boucles de régulation sont prévues pour :
- la régulation du débit de perméat : afin de compenser les fluctuations de température, de salinité, de vieillissement et de colmatage des membranes d'osmose inverse, une régulation de débit permet de corriger la pression appliquée en entrée de membrane, augmentant ou diminuant la pression efficace afin de maintenir une consigne de débit de perméat,
- une régulation du taux de conversion du système : afin de maintenir le taux de conversion à une valeur de consigne, les débits d'alimentation d'eau à traiter ainsi que du perméat (et/ou du concentrât) sont mesurés, la conversion calculée, et le débit de concentrât ajusté à l'aide de la vanne réglable prévue en sortie du récupérateur d'énergie ;

- la régulation du récupérateur d'énergie. Les récupérateurs d'énergie sont régulés de manière à contrôler, généralement au moyen d'une pompe de pressurisation, l'écoulement de concentrât et de l'eau prétraitée dans des conditions de débit en accord avec les consignes.

Les consignes introduites sur la base d'hypothèses de salinité, température et conditions hydrauliques, sont essentiellement prévues pour permettre de remplir les conditions garanties pour le volume de production et la qualité de l'eau produite, sans prendre en compte la consommation énergétique.

Le document WO 02/09855 A1 décrit un système de dessalement d'eau par osmose inverse comprenant deux chambres à membrane, l'énergie du concentrât issu de la deuxième chambre à membrane étant utilisée pour augmenter la pression du concentrât issu de la première chambre à membrane et injecté en entrée de la deuxième chambre à membrane. Cette récupération d'énergie est réalisée par un turbocompresseur. Dans ce système, de l'énergie est également récupérée par l'intermédiaire d'une turbine à impulsion.

Le document WO 2006/106158 A décrit un système de dessalement d'eau comprenant un récupérateur d'énergie permettant de transférer la pression du concentrât à une partie de l'eau à traiter.

Le document US 2004/109788 A1 décrit un système de production d'eau stérile pouvant faire intervenir un dispositif à osmose inverse.

Le document US 2004173528 A1 concerne un système de filtration à membrane comprenant un récupérateur d'énergie par transfert de pression entre le concentrât et le liquide à traiter.

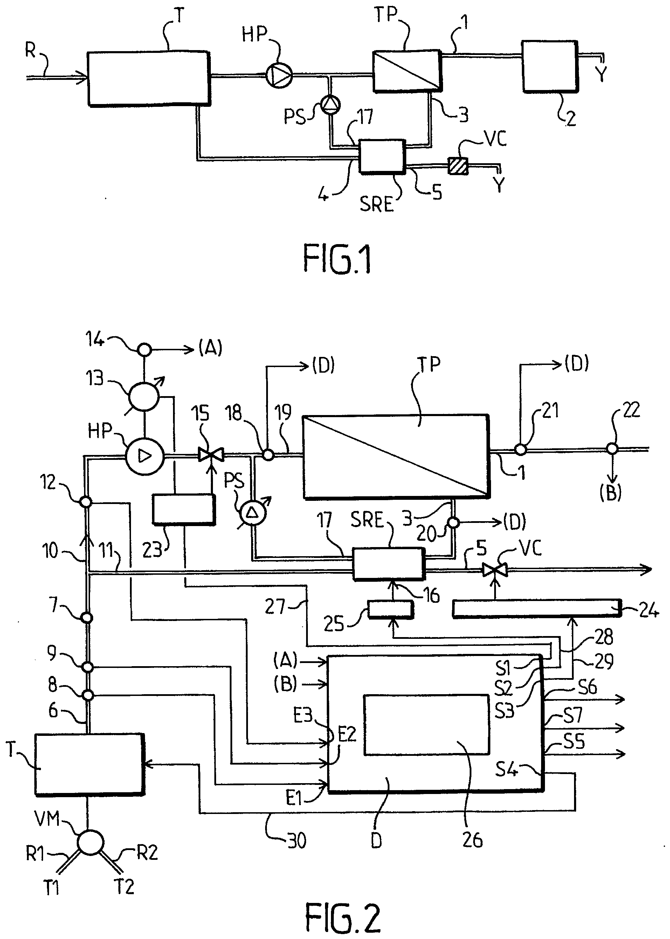

Le document Alatiqi et al: "Process control in water desalination industry: an overview" Desalination, Elsevier, Amsterdam, NL, vol. 126, no. 1-3, 1 november 1999, passe en revue différents procédés de dessalement d'eau. Le système de la figure 2 comporte un récupérateur d'énergie par turbine.

Le document Krause H. et al: "Improvement of operation and availability of MSF plants" Desalination, Elsevier, Amsterdam, NL, vol. 107, no. 1, 1 september 1996, développe des considérations générales sur les régulations d'installations de filtration à membrane et des algorithmes de commande.

Le document WO 2006/079483 A décrit un système et un procédé pour contrôler, simuler et optimiser une installation combinée de production d'énergie et de dessalement d'eau.

Le document WO 2007/041823 A concerne un système transportable de purification d'eau comportant deux filtres branchés en parallèle et fonctionnant en alternance.

Le document US 4,983,305 A décrit un système de dessalement d'eau par osmose inverse comprenant une chambre à membrane et un turbocompresseur permettant de récupérer l'énergie du concentrât pour élever la pression de l'eau à traiter par la chambre à membrane.

L'invention a pour but, surtout, de fournir une installation de dessalement d'eau par osmose inverse qui permet de minimiser la consommation énergétique du système dans son ensemble, dans des limites qui sont les garanties sur les quantités et qualités d'eaux produites.

L'invention consiste à inverser les priorités du pilotage de l'installation de dessalement au profit de la consommation énergétique. Le principe de l'invention consiste à doter l'ensemble de l'étage haute pression de l'installation d'osmose inverse d'une régulation secondaire ayant pour objectif la diminution de la consommation énergétique du système.

Selon l'invention, une installation de dessalement d'eau par osmose inverse, du genre défini précédemment, comporte :
- une régulation secondaire comprenant des moyens de calcul programmés pour déterminer, à partir des conditions de fonctionnement de l'installation fournies par les capteurs, une combinaison de valeurs de consigne pour :
   - le débit de la pompe haute pression,
   - le taux de mélange du récupérateur d'énergie,
   - le taux de conversion,
   - le cas échéant la température de l'eau d'alimentation (si plusieurs sources d'eau brute)
   - le cas échéant la salinité d'eau d'alimentation (si plusieurs sources d'eau brute) qui permet de minimiser la consommation énergétique de l'installation, ces valeurs de consigne se situant dans des limites garantissant les quantités et qualités d'eau produite, et la tenue des équipements,
- et des moyens de liaison entre d'une part les sorties de la régulation secondaire et d'autre part, le moyen de réglage du débit de la pompe haute pression, le moyen de réglage du taux de mélange entre la première partie du concentrât et la deuxième partie de l'eau à traiter, et la vanne de contrôle réglable (VC), de manière à y introduire ces valeurs de consigne.

Avantageusement, les moyens de calcul de la régulation secondaire, pour effectuer la détermination des trois consignes optimales (débit pompe HP, taux de mélange du récupérateur d'énergie, taux de conversion) minimisant la puissance électrique consommée en osmose inverse, sont programmés pour:
- exécuter, à intervalles réguliers, une recherche de la combinaison optimale des trois consignes en découpant chacun des domaines de variations possibles des trois consignes en n valeurs possibles ;
- réaliser le calcul théorique de la puissance consommée avec les paramètres de fonctionnement mesurés et les n*n*n (n puissance 3) possibilités de combinaison des trois consignes,
et la combinaison des consignes donnant la puissance théorique minimale est adoptée et appliquée au système.

Le programme des moyens de calcul peut comporter une boucle supplémentaire de la boucle logique principale pour comparer le résultat théorique obtenu à la consommation effective mesurée sur le système, et en cas de divergence importante, une alarme est émise, conduisant à une vérification des équipements du process ou, à intervalles réguliers, à un recalage des formules de calcul compte-tenu de l'évolution des caractéristiques des équipements par rapport à leurs valeurs assignées ayant servi à établir la formule de calcul initiale.

L'installation peut comporter au moins deux sources d'eau salée ayant des taux de salinité et/ou des températures différents, et une vanne réglable d'un mélange des ressources. Dans ce cas, avantageusement, les moyens de calcul de la régulation secondaire sont programmés pour déterminer une valeur de consigne optimale pour le taux de mélange des différentes sources d'eau salée pour réduire la consommation d'énergie, cette valeur de consigne étant appliquée à la vanne réglable du mélange.

Les moyens de calcul de la régulation secondaire peuvent être programmés pour déterminer la perméabilité de la membrane à partir des paramètres de débits, pressions de l'eau d'entrée, température et taux de salinité de l'eau prétraitée, du perméat et du concentrât, et pour émettre une indication ou une alarme lorsque la perméabilité devient inférieure à une limite nécessitant un nettoyage ou un remplacement pour minimiser la dépense énergétique.

Les moyens de calcul de la régulation secondaire sont de préférence programmés pour tenir compte des courbes de rendement et des performances de l'ensemble des équipements de l'installation, en particulier pompe, membrane, récupérateur d'énergie. Les courbes de rendement et les performances prises en compte sont à la fois théoriques et mesurées, en particulier lors de la mise en service de l'installation.

La régulation secondaire comporte des entrées au moins pour les paramètres suivants :
- température de l'eau en entrée,
- taux de salinité de l'eau à traiter,
- débits de l'eau à traiter à l'entrée de l'étage haute pression, à l'entrée de la pompe haute pression, à l'entrée de la pompe de pressurisation, à la sortie de l'étage haute pression, au rejet du concentrât ;
- pressions à l'entrée de la pompe haute pression, à l'entrée des membranes haute pression, à l'entrée de la pompe de pressurisation, à la sortie de l'étage haute pression (du perméat et du concentrât), au rejet du concentrât ;
- débit et pression du perméat sortant de l'unité à membrane,
- pression à l'entrée de l'unité à membrane,
- puissance active et énergie électrique consommée par la pompe haute pression.

Les moyens de calcul de la régulation secondaire peuvent être programmés selon un système de mode qui permet de donner une priorité aux réponses de la régulation et à son action sur l'installation en fonction des contraintes locales : débit de perméat prioritaire, ou débit du prétraitement prioritaire, ou qualité d'eau traitée prioritaire.

L'invention consiste, mises à part les dispositions exposées ci-dessus, en un certain nombre d'autres dispositions dont il sera plus explicitement question ci-après à propos d'un exemple de réalisation décrit avec référence aux dessins annexés, mais qui n'est nullement limitatif. Sur ces dessins :
Fig. 1 est un schéma simplifié d'une installation de dessalement d'eau.
Fig. 2 est un schéma plus détaillé de l'installation selon l'invention.
Fig. 3 est un diagramme illustrant la variation de la pression d'alimentation d'une unité à membrane en fonction de la température de l'eau à traiter.
Fig. 4 est un diagramme illustrant la variation de la pression d'alimentation de l'unité à membrane en fonction de la salinité, portée en abscisse, de l'eau à traiter.
Fig. 5 est un diagramme illustrant la variation de la pression d'alimentation portée en ordonnée, en fonction du débit du perméat porté en abscisse, et
Fig.6 est un logigramme de la régulation.

En se reportant à Fig. 1 des dessins, on peut voir le schéma d'une installation d'osmose inverse qui comprend :
- une unité de prétraitement T de l'eau à traiter provenant d'une ressource R ; l'unité de prétraitement peut être constituée par des membranes d'ultrafiltration, ou par un filtre bicouche ou unité équivalente ;
- une pompe haute pression HP permettant de pressuriser une partie de l'eau alimentant les membranes d'osmose inverse,
- une unité TP à membrane d'osmose inverse ; cette unité peut être formée par un tube de pression contenant plusieurs membranes, par exemple sept membranes, de type spiralé, adaptées au traitement de l'eau de mer ; la sortie perméat 1 de l'unité est connectée à un réservoir 2 de collecte des eaux perméatées ; la sortie concentrât 3 de l'unité TP alimente un récupérateur d'énergie SRE de type échange de pression.

Le récupérateur d'énergie SRE comporte une entrée 4 alimentée par de l'eau prétraitée, sortant de l'unité T, qui n'est pas pressurisée. Généralement le récupérateur d'énergie SRE comprend une pompe de surpression PS installée en ligne entre une sortie 17 du récupérateur d'énergie et l'entrée de l'unité à membrane TP. La pompe de surpression PS permet de rattraper les pertes de charge liées à l'écoulement de l'eau dans le circuit concentrât du système SRE, lequel comporte une sortie 5 pour le concentrât qui n'est plus sous pression. La sortie 5 est équipée d'une vanne de contrôle VC réglable dont le positionnement détermine le taux de conversion de l'installation, c'est-à-dire le rapport du débit d'eau traitée (perméat) à la sortie 1, au débit d'eau à traiter entrant dans l'unité de prétraitement T.

Fig. 2 est un schéma semblable à celui de Fig. 1, mais plus détaillé, d'une installation selon l'invention. Les éléments identiques ou semblables à ceux de Fig. 1 sont désignés par les mêmes références sans que leur description soit reprise.

L'unité de prétraitement T peut être alimentée à partir de plusieurs ressources R1, R2 qui arrivent sur une vanne de mélange VM dont la sortie alimente l'unité T. La vanne de mélange VM permet de régler, dans le débit de sortie, le taux de mélange c'est-à-dire la proportion de chacune des ressources R1, R2 qui peuvent avoir des températures et des taux de salinité différents.

Le débit total d'eau prétraitée par l'unité T s'écoule dans une conduite 6 équipée d'un débitmètre 7, d'une sonde 8 de mesure du taux de salinité, et d'une sonde 9 de mesure de température de l'eau prétraitée.

En aval des capteurs constitués par le débitmètre 7 et les sondes 8 et 9, la conduite 6 se divise en deux conduites 10, 11. La conduite 10 est reliée à l'entrée de la pompe HP. Un débitmètre 12 est installé sur cette conduite 10. La pompe HP est entraînée par un moteur électrique 13 à vitesse réglable. Un capteur 14 permet de mesurer la puissance active et l'énergie électrique consommée par le moteur 13; le signal du capteur 14 est envoyé sur une entrée A d'une régulation D dont il sera question plus loin. La sortie de la pompe HP est reliée à l'entrée de l'unité à membrane TP par l'intermédiaire d'une vanne réglable 15. Le débit de perméat 22 peut être réglé en agissant sur la vitesse du moteur 13 et/ou sur l'ouverture de la vanne 15. La conduite 11 dérive une partie de l'eau prétraitée, non pressurisée, vers le récupérateur d'énergie SRE qui comporte un moyen de commande 16 pour la valeur du mélange concentrât/eau traitée délivré sur la sortie 17 reliée à la pompe PS. Un capteur de pression 18 est disposé à l'entrée de l'unité TP sur une conduite 19 qui regroupe les flux provenant de la vanne 15 et de la pompe PS. Le signal du capteur 18 est envoyé sur une entrée de la régulation D.

Un autre capteur de pression 20 est disposé à la sortie concentrât de l'unité TP. La sortie perméat 1 est équipée d'un capteur de pression 21 et d'un débitmètre 22 fournissant le débit d'eau traitée.

Les paramètres d'entrée de l'installation pouvant varier de façon non maîtrisée, des boucles de régulation sont mises en place afin de maintenir stable le fonctionnement de l'installation. Sur Fig. 2, trois boucles de régulation sont schématiquement représentées : une boucle 23 pour la régulation du débit de perméat, les sorties de cette boucle agissant sur la vanne réglable 15 et/ou sur le moteur 13 à vitesse variable ; une boucle 24 de régulation du taux de conversion du système agissant sur la vanne VC afin de maintenir un taux de conversion correspondant à une consigne introduite dans la boucle 24 ; et une boucle 25 de régulation du récupérateur d'énergie de manière à contrôler le mélange concentrât/eau prétraitée dans des conditions de débit en accord avec une consigne fournie à la boucle 25.

Selon l'invention, l'installation comporte la régulation secondaire D comprenant des moyens de calcul 26, en particulier constitués par un micro-ordinateur, programmés pour déterminer, à partir des conditions de fonctionnement de l'installation fournies par les capteurs, une combinaison de valeurs de consigne comprenant le débit de perméat ; cette valeur de consigne est délivrée sur une sortie S1 de la régulation reliée par un conducteur 27 à l'entrée de la consigne de débit sur la boucle 23.

La régulation secondaire D délivre sur une autre sortie S2 une valeur de consigne pour le taux de mélange du récupérateur d'énergie SRE. La sortie S2 est reliée par un conducteur 28 à l'entrée de consigne de la boucle 25.

Sur une autre sortie S3 la régulation secondaire D fournit une valeur de consigne pour le taux de conversion et le réglage de la vanne VC. Cette sortie S3 est reliée par un conducteur 29 à l'entrée de consigne de la boucle 24.

La régulation secondaire D détermine la combinaison des trois valeurs de consigne, mentionnées ci-dessus, qui permet de minimiser la consommation énergétique du système, ces valeurs de consigne se situant dans des limites garantissant les quantités et qualités d'eau produite, et la tenue des équipements de l'installation.

Lorsque plusieurs ressources R1, R2 sont disponibles, on prévoit, sur la régulation secondaire D, une sortie S4 délivrant une consigne de taux de mélange des différentes ressources, qui est combinée avec les valeurs de consigne des sorties S1-S3 pour minimiser la consommation énergétique. La consigne de la sortie S4 est communiquée à l'entrée de consigne de la boucle de régulation de la vanne VM par un conducteur 30.

La régulation secondaire D comporte plusieurs entrées pour les différents paramètres de fonctionnement, notamment une entrée E1 pour le taux de salinité fourni par la sonde 8 reliée à cette entrée E1 ; une entrée E2 reliée à la sonde 9 pour recueillir la température de l'eau à traiter ; et une entrée E3 pour la valeur du débit fourni par le débitmètre 12.

La mesure de puissance active et d'énergie électrique, fournie par le capteur 14, est envoyée, par une liaison non représentée, sur l' entrée A de la régulation D, tandis que la valeur de débit de l'eau traitée fournie par le débitmètre 22 est envoyée, par une liaison non représentée, sur l'entrée B de la régulation secondaire D.

La régulation secondaire D est également alimentée, sur d'autres entrées non représentées, par les débits :
à l'entrée de l'étage haute pression, c'est-à-dire à l'entrée de l'unité TP ;
à l'entrée de la pompe de pressurisation PS ;
à la sortie de l'étage haute pression, c'est-à-dire à la sortie 3 de l'unité TP ;
au rejet du concentrât, c'est-à-dire en aval de la vanne VC.

La régulation D reçoit également en entrée les valeurs des pressions :
à l'entrée de la pompe HP ;
à l'entrée de l'unité de membrane TP (valeur fournie par le capteur 18) ;
à l'entrée de la pompe de pressurisation PS ;
à la sortie de l'étage haute pression, c'est-à-dire à la sortie de l'unité à membrane TP pour le perméat (capteur 21) et pour le concentrât (capteur 20) ; au rejet du concentrât, en aval de la vanne VC.

La programmation des moyens de calcul 26 tient compte des courbes de performances et de rendements de l'ensemble des équipements de l'installation : pompe, membrane, récupérateur d'énergie, mesurés lors d'essais de mise en service ou d'après les documentations des constructeurs.

Les moyens de calcul 26 sont également programmés pour déterminer la perméabilité Lp des membranes de l'unité TP à partir des mesures de débits et de pressions de l'eau d'entrée, du perméat et du concentrât, de la température et du taux de salinité de l'eau. Cette grandeur caractéristique de l'état des membranes est une grandeur à variation lente, contrairement aux autres paramètres, et pourra être utilisée pour plusieurs itérations de calcul. La régulation D délivre sur une sortie S5 des instructions pour maintenance/remplacement des membranes, comme résultat des calculs de perméabilité effectués.

Grâce à ce calcul de la perméabilité Lp de la membrane, la régulation secondaire D, en plus des instructions émises sur la sortie S5, pourra émettre sur une sortie S6 des alarmes et, sur une sortie S7, des rapports par exemple hebdomadaires destinés aux responsables de l'installation. En particulier, un remplacement des membranes pourra être proposé, le modèle mathématique de minimisation du coût de l'énergie consommée ayant décelé que le remplacement des membranes est devenu plus intéressant que la poursuite du fonctionnement avec les membranes actuelles consommant davantage que de nouvelles membranes.

L'optimisation, qui consiste à minimiser la dépense d'énergie nécessaire pour les pompes, peut être calculée à partir :
- des conditions de pression et de débit de chacune des pompes,
- des courbes de rendement théoriques et mesurées lors de la mise en service.

Les pressions et débits optimaux peuvent être calculés à partir de la température de l'eau à traiter, et du taux de salinité mesuré, de la perméabilité Lp calculée, et de trois paramètres modulables, à savoir le débit de perméat, le taux de mélange du récupérateur SRE, et le taux de conversion (et éventuellement la température et la salinité de l'eau prétraitée).

Cette optimisation économique tient compte des contraintes physiques de l'installation : domaine de variation des paramètres modulables, tenue des équipements.

La résolution de cette optimisation économique, après plusieurs itérations, fournit en données de sortie, sur les sorties S1, S2, S3 et éventuellement S4, la meilleure combinaison des éléments modulables à appliquer à l'installation pour minimiser l'énergie consommée.

Les imprécisions de mesure et de calcul sont corrigées d'une part grâce aux itérations des moyens de calcul de l'optimisation, et par la comparaison de la mesure de l'énergie consommée aux résultats attendus.

La régulation secondaire D remplit deux fonctions :
- une première fonction consiste en une minimisation court terme de la consommation énergétique en agissant au moins sur les trois consignes suivantes : taux de mélange au sein du récupérateur d'énergie ; taux de conversion grâce à la vanne VC ; débit de la pompe haute pression HP par action sur la vanne 15 et/ou sur la variation de vitesse du moteur 13 entraînant la pompe HP ;
- la seconde fonction étant une minimisation moyen-long terme en guidant la maintenance de l'installation et la stratégie de remplacement des équipements qui influencent la consommation énergétique.

Les moyens de calcul 26 de la régulation secondaire D sont programmés selon un système de mode qui permet de donner une priorité aux réponses de la régulation D et à son action sur l'installation en fonction des contraintes locales : débit de perméat prioritaire, ou débit du prétraitement prioritaire, ou qualité d'eau traitée prioritaire.

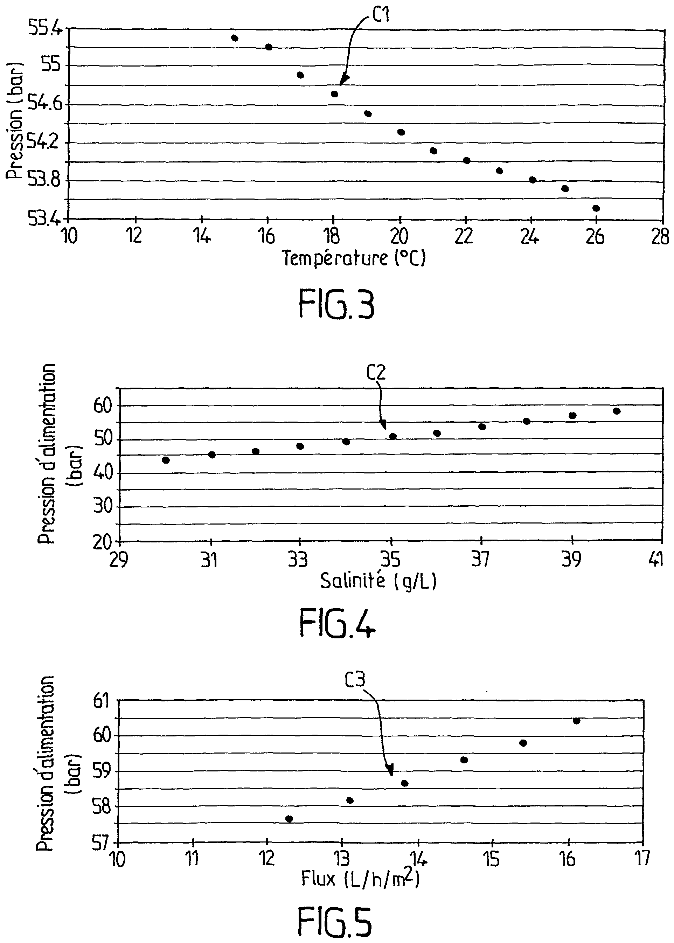

Afin d'illustrer la relation qui existe entre les différents paramètres, la courbe C1 de Fig. 3 présente l'évolution de la pression, portée en ordonnée, à l'entrée de l'unité à membrane TP en fonction de la température de l'eau à traiter. Cette courbe dépend de l'installation, notamment du type de membrane d'osmose inverse utilisé, et est liée à la viscosité de l'eau et aux caractéristiques hydrauliques de l'installation de dessalement. Globalement, il apparaît que la pression diminue en fonction de la température, cette pression étant d'environ 55.2 bars pour une température de 16°C et d'environ 53.5 bars pour une température de 26°C de l'eau.

Fig. 4 représente une courbe C2 qui illustre la relation entre la pression d'alimentation (portée en ordonnée) de l'unité TP, et la salinité exprimée en g/L (grammes/litre), portée en abscisse. Cette relation est liée à la pression osmotique générée par les sels présents dans l'eau, et elle est aussi fonction des conditions hydrauliques du système. La pression augmente avec la salinité et passe d'environ 44 bars pour une salinité d'environ 30 g/L, à une pression d'environ 58 bars pour une salinité d'environ 40 g/L.

Fig. 5 illustre, par la courbe C3, la variation de la pression d'alimentation portée en ordonnée en fonction du débit de perméat porté en abscisse, le taux de salinité et le taux de conversion étant fixés. Le débit ou flux de perméat est exprimé en L/h/m². Dans ce cas, pour une salinité d'eau définie, le paramètre à prendre en compte est la perméabilité de la membrane, associée aux conditions hydrauliques. La courbe C3 montre que la pression d'alimentation augmente, lorsque le flux augmente.

La régulation secondaire D a été évaluée sur un prototype d'installation d'osmose inverse conforme au schéma de Fig. 2.

Les paramètres pouvant influencer le fonctionnement de l'installation sont maîtrisés sur ce prototype.

### Première série d'essais

Durant les essais, l'installation fonctionne de façon stabilisée. Le Tableau 1 qui suit résume les conditions et résultats de la première série d'essais sur une installation prototype équipée de la régulation secondaire.

**Tableau 1**

| | Conditions initiales | Conditions 1 : génération d'une augmentation de salinité | Condition 1 après stabilisation | Conditions 2 : génération d'une augmentation de salinité | Condition 2 après stabilisation |
|---|---|---|---|---|---|
| Température (°C) | 20 | 20 | 20 | 20 | 20 |
| Salinité de l'eau prétraitée (g/L) | 37,05 | 37,6 | 37,6 | 39,5 | 39,5 |
| Consigne de débit (m³/h) | 3,4 | 3,4 | 3,4 | 3,4 | 3,4 |
| Consigne de conversion (%) | 45 | 45 | 43,6 | 43,6 | 41,3 |
| Pression d'alimentation mesurée (bar) | 55,6 | 56,04 | 55,6 | 57,16 | 55,6 |
| Débit de fuite SRE % | 0 | 0 | 6 | 6 | 0 |
| Pression concentrât mesurée (bar) | 54,4 | 54,8 | 54,7 | 56,26 | 54,7 |
| Pression perméat mesurée (bar) | 0,1 | 0,1 | 0,1 | 0,1 | 0,1 |
| Mode | | Débit de perméat limitant | Débit de perméat limitant | Débit de perméat limitant | Débit de perméat limitant |
| Energie consommée kWh/m3 | 2,17 | 2,19 | 2,17 | 2,23 | 2,17 |

### Conditions initiales :

Dans ces conditions initiales, le prototype est alimenté par un système de prétraitement d'eau de mer, et fonctionne à un débit de 3,4 m³/h (débit de production de perméat), avec une consigne de taux de conversion de 45 %. La salinité de l'eau de mer prétraitée est de 37,05 g/L et sa température de 20°C.

La consommation d'énergie de l'installation est égale à l'énergie consommée par la pompe HP, soit 2,17 kWh/m³, augmentée de la consommation électrique du prétraitement (unité T) ce qui donne une consommation de 2,33 kWh/m³ de perméat produit.

### Conditions 1 :

La colonne Conditions 1 correspond à une modification de la salinité de l'eau à l'entrée de l'installation, modification volontairement réalisée afin de noter le comportement de l'installation avec régulation secondaire.

La salinité passe de 37,05 à 37,6 g/L, ce qui entraîne une correction par les boucles de régulation primaire, afin de maintenir stable le débit de perméat et la conversion du système. Cette correction se traduit par une augmentation de la pression d'alimentation qui passe de 55,6 à 56,04 bars pour maintenir le débit de perméat et le taux de conversion. La pression concentrât mesurée passe de 54,4 à 54,8 bars et l'énergie consommée augmente à 2,19 kWh/m³.

La régulation secondaire D commence par évaluer, en fonction du mode retenu (débit de perméat prioritaire), les actions possibles sur l'installation. Pour minimiser la consommation électrique, la régulation secondaire D va agir sur le taux de conversion de l'installation qui diminue de 45 à 43,6 %, selon la troisième colonne « Condition 1 après stabilisation », tout d'abord en minimisant la salinité générée par le récupérateur d'énergie SRE.

La consigne de débit de mélange du récupérateur SRE est diminuée au moyen d'une boucle de régulation primaire de la pompe PS, ce qui correspond au débit de fuite de 6 % de la troisième colonne après stabilisation du système. La salinité baisse en sortie du récupérateur SRE, diminuant l'impact de l'augmentation de salinité de l'eau brute, et ramenant l'installation à sa pression de fonctionnement de 55,6 bars initiale. L'énergie consommée par la pompe haute pression HP retrouve la valeur initiale de 2,17 kWh/m³.

### Conditions 2 :

La salinité de l'eau prétraitée est augmentée une nouvelle fois pour passer de 37,6 à 39,5 g/L comme indiqué dans la quatrième colonne du tableau 1. L'installation prototype est toujours en mode production de perméat prioritaire. Selon la colonne 4, les boucles de régulation primaire engendrent une augmentation de la pression d'alimentation à la valeur de 57,16 bars pour maintenir la production, ce qui entraîne une augmentation de la puissance consommée à 2,23 kWh/m³ par la pompe HP.

Dans ce cas, la régulation secondaire D évalue les moyens d'action. Le récupérateur SRE ayant atteint son débit maximal de déconcentration, la régulation secondaire D modifie la consigne du taux de conversion de l'ensemble de l'installation, c'est-à-dire la consigne de la vanne VC. Le taux de conversion passe à la valeur de 41,3 % comme il apparaît dans la dernière colonne du tableau 1.

Après stabilisation, l'installation prototype est ramenée dans ses conditions initiales de fonctionnement avec une pression d'alimentation de 55,6 bars et une énergie consommée par la pompe HP de 2,17 kWh/m³.

### Deuxième série d'essais

Le Tableau 2 qui suit résume les conditions et résultats des essais de l'installation prototype avec régulation secondaire, lors d'une seconde série d'essais.

**Tableau 2**

| | Conditions initiales | Conditions 3 : génération d'une baisse de la température | Condition 3 après stabilisation | Conditions 4 : généra-tion d'un vieillissement des membranes d'osmose inverse | Conditions 4 après lavage chimique |
|---|---|---|---|---|---|
| Température (°C) | 20 | 15,5 | 15,5 | 15,5 | 15,5 |
| Salinité de l'eau prétraitée (g/L) | 37,05 | 37,05 | 37,05 | 37,05 | 37,05 |
| Consigne de débit (m³/h) | 3,4 | 3,4 | 3,35 | 3,35 | 3,35 |
| Consigne de conversion (%) | 45 | 45 | 44,3 | 44,3 | 44,3 |
| Pression d'alimentation mesurée (bar) | 55,6 | 56,2 | 55,25 | 61,1 | 55,2 |
| Débit de fuite SRE % | 0 | 0 | 0 | 0 | 0 |
| Pression concentrât mesurée (bar) | 54,7 | 55,7 | 54,35 | 58,6 | 54,2 |
| Pression perméat mesurée (bar) | 0,1 | 0,1 | 0,1 | 0,1 | 0,1 |
| Mode | | Débit perméat non limitant Ressource limitante | Débit perméat non limitant Ressource limitante | Débit de perméat limitant | Débit de perméat limitant |
| Energie consommée kWh/m3 | 2,17 | 2,19 | 2,17 | 2,37 | 2,17 |

### Conditions 3 :

La deuxième colonne du tableau 2 rassemble les conditions d'un essai pour lequel la température de l'eau d'alimentation est abaissée de 20°C à 15,5°C, au moyen d'un échangeur thermique et d'un groupe de réfrigération. Les valeurs données dans la deuxième colonne correspondent à celles induites par les boucles de régulation primaires avant intervention de la régulation secondaire et stabilisation, qui correspond à la troisième colonne.

Selon la deuxième colonne, afin de maintenir le débit de production, les boucles de régulation primaire ajustent la pression d'alimentation de l'installation qui passe ainsi de 55,6 bars à 56,2 bars entraînant une augmentation de la consommation d'énergie par la pompe HP de 2,17 à 2,19 kWh/m³ de perméat.

Dans cet exemple, la priorité est accordée à la ressource, le débit de production n'étant pas prioritaire. Dans ce cas, la régulation secondaire D va modifier le débit de perméat qui passe de 3,4 à 3,35 m³/h, la consigne de conversion diminuant de 45 % à 44,3 %. La consommation d'énergie revient à la valeur initiale de 2,17 kWh/m³ après stabilisation, comme indiqué dans la colonne 3.

### Conditions 4 :

Le quatrième exemple, correspondant à la quatrième colonne du tableau 2, concerne le vieillissement des membranes d'osmose inverse. Ce vieillissement se traduit ici par une perte de perméabilité avec une augmentation de la perte de charge des membranes, à laquelle correspond la différence entre la pression d'alimentation de 61,1 bars et la pression du concentrât de 58,6 bars en sortie de l'unité à membrane TP.

Dans ce cas, la régulation secondaire D se base non seulement sur les données d'entrée directe, mais aussi sur les résultats de calcul de la membrane identifiant une baisse significative de la perméabilité. La régulation secondaire va recommander à l'opérateur de réaliser un lavage chimique. La colonne 5 montre qu'après réalisation du lavage chimique assurant l'amélioration de la perméabilité des membranes d'osmose inverse, on retrouve une pression de fonctionnement de 55,2 bars (pression d'alimentation) et une consommation d'énergie de 2,17 kWh/m³ comparables à celles de la colonne 3 (conditions 3 après stabilisation), avec eau d'alimentation à 15,5°.

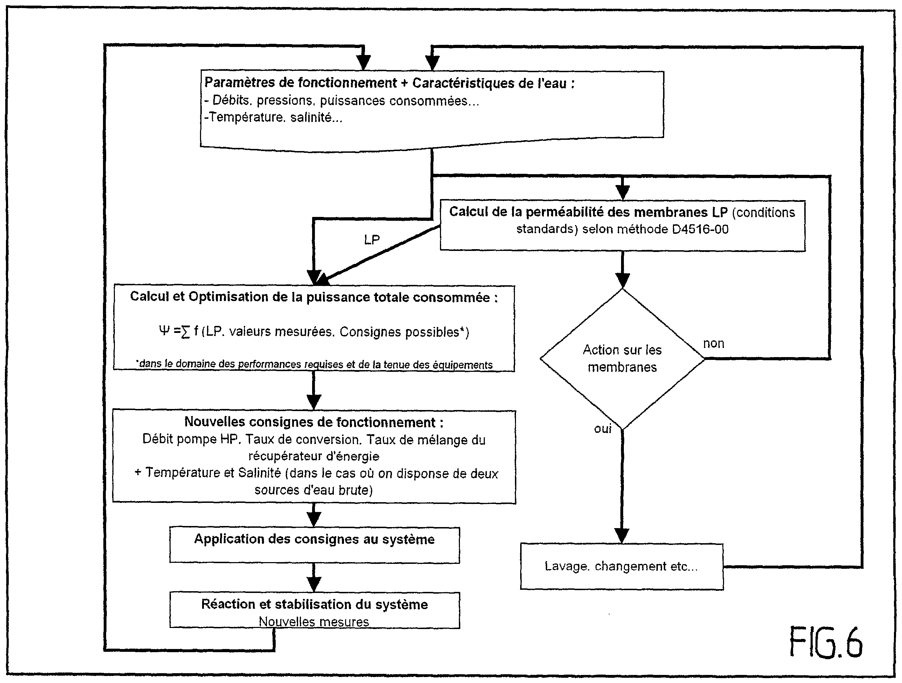

Fig.6 montre un logigramme récapitulant le fonctionnement de la régulation.

Les installations de dessalement d'eau par osmose traitent des volumes importants par jour, en moyenne de l'ordre de 120 000 m³ par jour, de sorte que les économies d'énergie procurées par l'invention sont importantes en valeur absolue, alors que la valeur relative est de l'ordre de quelques %.

Avantageusement, les moyens de calcul sont programmés pour effectuer la détermination des trois consignes optimales (débit pompe HP, taux de mélange du récupérateur d'énergie, taux de conversion) minimisant la puissance électrique consommée en osmose inverse comme suit.

On dispose de la formule de calcul théorique suivante : Puissance électrique consommée par pompes = Fonction (trois consignes, paramètres de fonctionnement mesurés).

On connaît les domaines de variation possibles des trois consignes (limitation par garanties process et capacités des équipements)

A intervalles réguliers, une recherche de la combinaison optimale des trois consignes est effectuée de la manière suivante :
Chacun des domaines de variations des trois consignes est dichotomé, ou plus généralement découpé, en n valeurs possibles (e.g. pour un débit possible de 100 à 110, cent valeurs sont considérées : 100, 100.1, 100.2, ...109.9, 110)

Le calcul théorique de la puissance consommée est réalisé avec les paramètres de fonctionnement mesurés et les n*n*n (n puissance 3) possibilités de combinaison des trois consignes.

La combinaison des consignes donnant la puissance théorique minimale est adoptée et appliquée au système.

Une boucle supplémentaire de la boucle logique principale compare le résultat théorique obtenu à la consommation effective mesurée sur le système. En cas de divergence importante, une alarme est émise, conduisant à une vérification des équipements du process ou à intervalles réguliers à un recalage des formules de calcul compte-tenu de l'évolution des caractéristiques des équipements par rapport à leurs valeurs assignées ayant servi à établir la formule de calcul initiale.

## Revendications

1. Installation de dessalement d'eau par osmose inverse, comportant :
- une unité à membrane d'osmose inverse (TP),
- au moins une pompe haute pression (HP) pour porter une première partie de l'eau à traiter à une pression supérieure à sa pression osmotique et l'envoyer à l'entrée de l'unité à membrane,
- un moyen de réglage du débit de la pompe haute pression, ce moyen comprenant une vanne réglable (15) installée sur la sortie de la pompe haute pression et/ou un moteur d'entraînement de la pompe à vitesse variable (13),
- un récupérateur d'énergie (SRE) de type échange de pression propre à transférer la pression du concentrât sortant de l'unité à membrane à une deuxième partie de l'eau à traiter, ce récupérateur comportant
- une première entrée (4) recevant la deuxième partie de l'eau à traiter,
- une deuxième entrée recevant le concentrât,
- une première sortie (17) délivrant à une entrée de l'unité à membrane un mélange entre une première partie du concentrât et la deuxième partie de l'eau à traiter,
- une deuxième sortie (5) délivrant une deuxième partie du concentrât, et
- un moyen de réglage du taux de mélange entre la première partie du concentrât et la deuxième partie de l'eau à traiter, et
- une vanne de contrôle réglable (VC) installée à la deuxième sortie (5) du récupérateur, permettant de régler le taux de conversion,
- des capteurs de divers paramètres de fonctionnement, en particulier pression, débit, température, taux de salinité, prévus en des endroits appropriés,
- des boucles de régulation pour que le moyen de réglage du débit de la pompe haute pression, le moyen de réglage du taux de mélange entre la première partie du concentrât et la deuxième partie de l'eau à traiter, et la vanne de contrôle réglable (VC) se maintiennent à une valeur de consigne,
- une régulation secondaire (D) comprenant des moyens de calcul (26) programmés pour déterminer, à partir des conditions de fonctionnement de l'installation fournies par les capteurs, une combinaison de valeurs de consigne pour:
- le débit de la pompe haute pression,
- le taux de mélange du récupérateur d'énergie,
- et le taux de conversion, qui permet de minimiser la consommation énergétique de l'installation, ces valeurs de consigne se situant dans des limites garantissant les quantités et qualités d'eau produite, et la tenue des équipements,
- et des moyens de liaison entre, d'une part, les sorties de la régulation secondaire et, d'autre part, le moyen de réglage du débit de la pompe haute pression, le moyen de réglage du taux de mélange entre la première partie du concentrât et la deuxième partie de l'eau à traiter, et la vanne de contrôle réglable (VC), de manière à y introduire ces valeurs de consigne.

2. Installation selon la revendication 1, **caractérisée en ce que** les moyens de calcul (26) de la régulation secondaire, pour effectuer la détermination des trois consignes optimales minimisant la puissance électrique consommée en osmose inverse, sont programmés pour:
- exécuter, à intervalles réguliers, une recherche de la combinaison optimale des trois consignes en découpant chacun des domaines de variations possibles des trois consignes en n valeurs possibles ;
- réaliser le calcul théorique de la puissance consommée avec les paramètres de fonctionnement mesurés et les n*n*n possibilités de combinaison des trois consignes,
et la combinaison des consignes donnant la puissance théorique minimale est adoptée et appliquée au système.

3. Installation selon la revendication 2, **caractérisée en ce que** le programme des moyens de calcul comporte une boucle supplémentaire de la boucle logique principale pour comparer le résultat théorique obtenu à la consommation effective mesurée sur le système, et en cas de divergence importante, une alarme est émise, conduisant à une vérification des équipements du process ou, à intervalles réguliers, à un recalage des formules de calcul compte-tenu de l'évolution des caractéristiques des équipements par rapport à leurs valeurs assignées ayant servi à établir la formule de calcul initiale.

4. Installation selon l'une quelconque des revendications précédentes, comportant au moins deux sources d'eau salée ayant des taux de salinité et/ou des températures différents, et une vanne réglable (VM) d'un mélange des ressources, **caractérisée en ce que** les moyens de calcul (26) de la régulation secondaire sont programmés pour déterminer une valeur de consigne optimale pour le taux de mélange des différentes sources d'eau salée pour réduire la consommation d'énergie, cette valeur de consigne étant appliquée à la vanne réglable (VM) du mélange.

5. Installation selon l'une quelconque des revendications précédentes, **caractérisée en ce que** les moyens de calcul (26) de la régulation secondaire sont programmés pour déterminer la perméabilité (Lp) de la membrane à partir des paramètres de débits, pressions, température et salinité de l'eau prétraitée, du perméat et du concentrât, et pour émettre une indication ou une alarme lorsque la perméabilité devient inférieure à une limite nécessitant un nettoyage ou un remplacement pour minimiser la dépense énergétique.

6. Installation selon l'une quelconque des revendications précédentes, **caractérisée en ce que** les moyens de calcul (26) de la régulation secondaire sont programmés pour tenir compte des courbes de rendement et des performances de l'ensemble des équipements de l'installation, en particulier pompe, membrane, récupérateur d'énergie.

7. Installation selon l'une quelconque des revendications précédentes, **caractérisée en ce que** la régulation secondaire (D) comporte des entrées au moins pour les paramètres suivants :
- température de l'eau en entrée,
- taux de salinité de l'eau à traiter,
- débits de l'eau à traiter à l'entrée de l'étage haute pression, à l'entrée de la pompe haute pression, à l'entrée de la pompe de pressurisation, à la sortie de l'étage haute pression, au rejet du concentrât ;
- pressions à l'entrée de la pompe haute pression, à l'entrée des membranes haute pression, à l'entrée de la pompe de pressurisation, à la sortie de l'étage haute pression, au rejet du concentrât ;
- débit et pression du perméat sortant de l'unité à membrane,
- pression à l'entrée de l'unité à membrane,
- puissance active et énergie électrique consommée par la pompe haute pression.

8. Installation selon l'une quelconque des revendications précédentes, **caractérisée en ce que** les moyens de calcul (26) de la régulation secondaire sont programmés selon un système de mode qui permet de donner une priorité aux réponses de la régulation (D) et à son action sur l'installation en fonction des contraintes locales : débit de perméat prioritaire, ou débit du prétraitement prioritaire, ou qualité d'eau traitée prioritaire.

## Patentansprüche

1. Anlage zur Wasserentsalzung durch Umkehrosmose, mit:
- einer Umkehrosmose-Membraneinheit (TP),
- mindestens einer Hochdruckpumpe (HP), um einen ersten Teil des aufzubereitenden Wassers auf einen Druck zu bringen, der höher ist als sein osmotischer Druck, und um ihn an den Eingang der Membraneinheit zu leiten,
- einem Mittel zum Regeln der Durchflussmenge der Hochdruckpumpe, wobei dieses Mittel ein regelbares Ventil (15) umfasst, das am Ausgang der Hochdruckpumpe installiert ist, und/oder einen Motor zum Antreiben der Pumpe mit variabler Geschwindigkeit (13) umfasst,
- einem Energierückgewinner (SRE) des Druckaustauschtyps, der dazu in der Lage ist, den Druck des aus der Membraneinheit austretenden Konzentrats auf einen zweiten Teil des aufzubereitenden Wassers zu übertragen, wobei dieser Rückgewinner Folgendes aufweist:
- einen ersten Eingang (4), der den zweiten Teil des aufzubereitenden Wassers aufnimmt,
- einen zweiten Eingang, der das Konzentrat aufnimmt,
- einen ersten Ausgang (17), der an einem Eingang der Membraneinheit eine Mischung zwischen einem ersten Teil des Konzentrats und dem zweiten Teil des aufzubereitenden Wassers ausgibt,
- einen zweiten Ausgang (5), der einen zweiten Teil des Konzentrats ausgibt, und
- ein Mittel zum Regeln des Mischungsverhältnisses zwischen dem ersten Teil des Konzentrats und dem zweiten Teil des aufzubereitenden Wassers, und
- einem regelbaren Steuerventil (VC), das am zweiten Ausgang (5) des Rückgewinners zum Regeln des Mischverhältnisses installiert ist,
- Sensoren für verschiedene Betriebsparameter, insbesondere Druck, Durchflussmenge, Temperatur, Salzgehalt, die an geeigneten Stellen vorgesehen sind,
- Regelschleifen, damit das Mittel zum Regeln der Durchflussmenge der Hochdruckpumpe, das Mittel zum Regeln des Mischungsverhältnisses zwischen dem ersten Teil des Konzentrats und dem zweiten Teil des aufzubereitenden Wassers und das regelbare Steuerventil (VC) auf einem Sollwert gehalten werden,
- einer Sekundärregelung (D), die Rechenmittel (26) umfasst, die programmiert sind, um ausgehend von den Betriebsbedingungen der Anlage, die von den Sensoren bereitgestellt werden, eine Kombination aus Sollwerten zu bestimmen für:
- die Durchflussmenge der Hochdruckpumpe,
- das Mischungsverhältnis des Energierückgewinners
- und die Konversionsrate,
die es ermöglicht, den Energieverbrauch der Anlage zu minimieren, wobei diese Sollwerte innerhalb von Grenzwerten liegen, welche die Quantität und die Qualität des erzeugten Wassers und die Haltbarkeit der Einrichtungen garantieren,
- und Mittel zum Verbinden einerseits der Ausgänge der Sekundärregelung und andererseits dem Mittel zum Regeln der Durchflussmenge der Hochdruckpumpe, dem Mittel zum Regeln des Mischungsverhältnisses zwischen dem ersten Teil des Konzentrats und dem zweiten Teil des aufzubereitenden Wassers, und dem regelbaren Steuerventil (VC) in der Form, dass darin diese Sollwerte eingebracht werden.

2. Anlage nach Anspruch 1, **dadurch gekennzeichnet, dass** die Rechenmittel (26) der Sekundärregelung zur Durchführung der Bestimmung der drei optimalen Sollwerte zur Minimierung der elektrischen Leistungsaufnahme in Umkehrosmose programmiert sind, um:
- in regelmäßigen zeitlichen Abständen eine Suche nach der optimalen Kombination aus den drei Sollwerten durchzuführen, indem jeder der möglichen Variationsbereiche der drei Sollwerte n mögliche Werte zerlegt werden;
- die theoretische Berechnung der Energieaufnahme mit den gemessenen Betriebsparametern und den n*n*n Kombinationsmöglichkeiten aus den drei Sollwerten zu realisieren,
und wobei die Kombination aus den Sollwerten, welche die minimale theoretische Leistung angibt, angenommen und auf das System angewendet wird.

3. Anlage nach Anspruch 2, **dadurch gekennzeichnet, dass** das Programm der Rechenmittel eine Schleife zusätzlich zu der logischen Hauptschleife aufweist, um das erhaltene theoretische Ergebnis mit dem tatsächlichen, an dem System gemessenen Verbrauch zu vergleichen, und dass, für den Fall einer großen Abweichung, ein Alarm ausgegeben wird, der zu einer Überprüfung der Prozesseinrichtungen oder in regelmäßigen zeitlichen Abständen zu einer Nachführung der Rechenformeln unter Berücksichtigung der Entwicklung der Merkmale der Einrichtungen gegenüber ihren zugewiesenen Werten, die zur Erstellung der ursprünglichen Rechenformel dienten, führt.

4. Anlage einem der vorhergehenden Ansprüche, mit mindestens zwei Salzwasserquellen, die unterschiedliche Salzanteile und/oder Temperaturen haben, und einem regelbaren Ventil (VM) einer Mischung der Quellen, **dadurch gekennzeichnet, dass** die Rechenmittel (26) der Sekundärregelung programmiert sind, um einen optimalen Sollwert für das Mischungsverhältnis der verschiedenen Salzwasserquellen zu bestimmen, um den Energieverbrauch zu reduzieren, wobei dieser Sollwert auf das regelbare Ventil (VM) der Mischung angewendet wird.

5. Anlage nach einem der vorhergehenden Ansprüche, **dadurch gekennzeichnet, dass** die Rechenmittel (26) der Sekundärregelung programmiert sind, um die Durchlässigkeit (Lp) der Membran ausgehend von den Parametern Durchflussmengen, Drücke, Temperatur und Salzgehalt des aufbereiteten Wassers, des Permeats und des Konzentrats zu bestimmen und um eine Anzeige oder einer Alarm auszugeben, wenn die Durchlässigkeit kleiner als ein Grenzwert wird, der einer Reinigung oder eines Austauschs bedarf, um den Energieverbrauch zu minimieren.

6. Anlage nach einem der vorhergehenden Ansprüche, **dadurch gekennzeichnet, dass** die die Rechenmittel (26) der Sekundärregelung programmiert sind, um die Kurven der Wirkungsgrade und der Leistungen der gesamten Einrichtungen der Anlagen zu berücksichtigen, insbesondere Pumpe, Membran, Energierückgewinner.

7. Anlage nach einem der vorhergehenden Ansprüche, **dadurch gekennzeichnet, dass** die Sekundärregelung (D) Eingaben mindestens für die folgenden Parameter aufweist:
- Temperatur des Wassers am Eingang,
- Salzgehalt des aufzubereitenden Wassers,
- Durchflussmengen des aufzubereitenden Wassers der Hochdruckstufe am Eingang der Hochdruckpumpe, am Eingang der Druckpumpe, am Ausgang der Hochdruckstufe, am Ausstoß des Konzentrats;
- Drücke am Eingang der Hochdruckpumpe, am Eingang der Hochdruckmembranen, am Eingang der Druckpumpe, am Ausgang der Hochdruckstufe, am Ausstoß des Konzentrats;
- Durchflussmenge und Druck des Permeats, das aus der Membraneinheit austritt,
- Druck am Eingang der Membraneinheit,
- aktive Leistung und elektrische Energieaufnahme durch die Hochdruckpumpe.

8. Anlage nach einem der vorhergehenden Ansprüche, **dadurch gekennzeichnet, dass** die Rechenmittel (26) der Sekundärregelung nach einem Modussystem programmiert sind, das es ermöglicht, dem Ansprechen der Sekundärregelung (D) und ihrer Einwirkung auf die Anlage in Abhängigkeit von den örtlichen Bedingungen: prioritäre Durchflussmenge oder prioritäre Vorbehandlungsdurchflussmenge oder prioritäre Qualität des aufbereiteten Wassers, eine Priorität zu verleihen.

## Claims

1. A reverse-osmosis water desalination plant comprising:
- a reverse-osmosis membrane unit (TP),
- at least one high-pressure pump (HP) for taking a first portion of the water to be treated to a pressure higher than its osmotic pressure and sending it to the inlet of the membrane unit,
- a means for adjusting the flow rate of the high-pressure pump, this means comprising an adjustable valve (15) installed on the outlet of the high-pressure pump and/or a drive motor for driving the pump at variable speed (13),
- an energy collector (SRE) of the pressure-exchange type suitable for transferring the pressure of the concentrate leaving the membrane unit to a second portion of the water to be treated, this collector comprising
- a first inlet (4) receiving the second portion of the water to be treated,
- a second inlet receiving the concentrate,
- a first outlet (17) delivering to an inlet of the membrane unit a mixture between a first portion of the concentrate and the second portion of the water to be treated,
- a second outlet (5) delivering a second portion of the concentrate, and
- a means for adjusting the mixture ratio between the first portion of the concentrate and the second portion of the water-to-be-treated, and
- an adjustable control valve (VC) installed at the second outlet (5) of the collector, making it possible to adjust the conversion rate,
- sensors of various operating parameters, in particular pressure, flow rate, temperature, salinity ratio, provided in appropriate locations,
- control loops so that the means for adjusting the flow rate of the high-pressure pump, the means for adjusting the mixture ratio between the first portion of the concentrate and the second portion of the water to be treated, and the adjustable control valve (VC) are maintained at a setpoint value,
- a secondary adjustment (D) comprising computing means (26) programmed to determine, based on the operating conditions of the plant supplied by the sensors, a combination of setpoint values for:
- the flow rate of the high-pressure pump,
- the mixture ratio of the energy collector,
- and the conversion ratio,
which makes it possible to minimize the energy consumption of the plant, these setpoint values being situated within limits ensuring the quantities and qualities of water produced and the behavior of the equipment,
- and means of connection between, on the one hand, the outlets of the secondary adjustment and, on the other hand, the means for adjusting the flow rate of the high-pressure pump, the means for adjusting the mixture ratio between the first portion of the concentrate and the second portion of the water-to-be-treated, and the adjustable control valve (VC), in order to insert therein these setpoint values.

2. The plant as claimed in claim 1, **characterized in that** the computing means (26) of the secondary adjustment, in order to determine the three optimal setpoints minimizing the electric power consumed in reverse osmosis, are programmed to:
- execute, at regular intervals, a search for the optimal combination of the three setpoints by dividing each of the possible variation fields of the three setpoints into n possible values;
- carry out the theoretical computation of the consumed power with the measured operating parameters and the n*n*n combination possibilities of the three setpoints,
and the combination of the setpoints giving the minimal theoretical power is adopted and applied to the system.

3. The plant as claimed in claim 2, **characterized in that** the program of the computing means comprises an additional loop of the main logic loop for comparing the theoretical result obtained with the actual consumption measured on the system, and, if there is a considerable difference, an alarm is emitted, leading to a verification of the equipment of the process or, at regular intervals, to a resetting of the computation formulas taking account of the change in the characteristics of the equipment relative to their assigned values that were used to establish the initial computation formula.

4. The plant as claimed in any one of the preceding claims, comprising at least two sources of salt water having different salinity ratios and/or temperatures, and an adjustable valve (VM) for adjusting a mixture of the resources, **characterized in that** the computation means (26) of the secondary adjustment are programmed to determine an optimal setpoint value for the mixture ratio of the various sources of salt water in order to reduce the energy consumption, this setpoint value being applied to the adjustable valve (VM) of the mixture.

5. The plant as claimed in any one of the preceding claims, **characterized in that** the computation means (26) of the secondary adjustment are programmed to determine the permeability (Lp) of the membrane based on the flow-rate, pressure, temperature and salinity parameters of the pretreated water, of the filtrate and of the concentrate, and to emit an indication or an alarm when the permeability falls below a limit requiring a cleaning or a replacement in order to minimize the use of energy.

6. The plant as claimed in any one of the preceding claims, **characterized in that** the computation means (26) of the secondary adjustment are programmed to take account of the efficiency and performance curves of all of the equipment of the plant, in particular the pump, membrane and energy collector.

7. The plant as claimed in any one of the preceding claims, **characterized in that** the secondary adjustment (D) comprises inputs at least for the following parameters:
- water temperature at the inlet,
- salinity ratio of the water to be treated,
- flow rates of the water to be treated at the inlet of the high-pressure stage, at the inlet of the high-pressure pump, at the inlet of the booster pump, at the outlet of the high-pressure stage, at the discharge of the concentrate;
- pressures at the inlet of the high-pressure pump, at the inlet of the high-pressure membranes, at the inlet of the booster pump, at the outlet of the high-pressure stage, at the discharge of the concentrate;
- flow rate and pressure of the filtrate leaving the membrane unit,
- pressure at the inlet of the membrane unit,
- active power and electric energy consumed by the high-pressure pump.

8. The plant as claimed in any one of the preceding claims, **characterized in that** the computation means (26) of the secondary adjustment are programmed according to a mode system which makes it possible to give priority to the responses of the control (D) and to its action on the plant according to the local constraints: priority to flow rate of filtrate, or priority to flow rate of pretreatment, or priority to quality of treated water.
